(19)

Europäisches
Patentamt
European
Patent Office
Office européen
des brevets

(11)  **EP 2 463 939 A1**

(12)  **EUROPEAN PATENT APPLICATION**
published in accordance with Art. 153(4) EPC

(43) Date of publication:
**13.06.2012  Bulletin 2012/24**

(21) Application number: **10806573.1**

(22) Date of filing: **02.08.2010**

(51) Int Cl.:
*H01M 4/13* (2010.01)          *H01M 2/16* (2006.01)
*H01M 4/131* (2010.01)         *H01M 4/139* (2010.01)
*H01M 4/1391* (2010.01)        *H01M 4/505* (2010.01)
*H01M 4/525* (2010.01)         *H01M 4/62* (2006.01)

(86) International application number:
**PCT/JP2010/063441**

(87) International publication number:
**WO 2011/016574 (10.02.2011 Gazette 2011/06)**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **04.08.2009  JP 2009181340**

(71) Applicant: **Sumitomo Chemical Company, Limited
Tokyo 104-8260 (JP)**

(72) Inventor: **TANINO, Kazuyuki
Tsukuba-shi
Ibaraki 300-2657 (JP)**

(74) Representative: **Hart-Davis, Jason et al
Cabinet Beau de Loménie
158, rue de l'Université
75340 Paris Cedex 07 (FR)**

(54)  **POWDERY MATERIAL AND POSITIVE ELECTRODE MIXTURE**

(57)      In accordance with the present invention, a powdery material and a positive electrode mixture for providing a nonaqueous electrolyte secondary battery capable of exhibiting a higher output under high current rate conditions are provided. The powdery material according to the present invention comprises a positive electrode active material powder having an average particle diameter of from 0.05 $\mu$m to 1 $\mu$m and two or more types of graphite powder wherein the average particle diameters of the two or more types of the graphite powder are different from each other and each graphite powder has an average particle diameter of from 0.01 $\mu$m to 20 $\mu$m. The positive electrode mixture according to then present invention comprises the powdery material, a binder, and a solvent.

EP 2 463 939 A1

**Description**

TECHNICAL FIELD

The present invention relates to a powdery material and a positive electrode mixture. More specifically, the present invention relates to a powdery material comprising a positive electrode active material powder and graphite powder and to a positive electrode mixture comprising the powdery material.

BACKGROUND ART

A powdery material comprising a positive electrode active material powder and a graphite powder has been used for the positive electrode of a nonaqueous electrolyte secondary battery, for example, a lithium secondary battery. Nonaqueous electrolyte secondary batteries have already been put into practical use as small power supplies for mobile phones, notebook computers, etc., and have also been used as medium/large-sized power sources for applications in automobiles, electric powder storages, etc.

Patent Literature 1 specifically describes a powdery material comprising a positive electrode active material powder having an average particle diameter of from 9.1 $\mu$m to 20.5 $\mu$m and a graphite powder having an average particle diameter of from 3.3 $\mu$m to 51.5 $\mu$m as a conventional powdery material. However, a nonaqueous electrolyte secondary battery having as a positive electrode an electrode obtained by applying a positive electrode mixture containing the powdery material to a current collector, the high internal resistance value of the positive electrode. Therefor, the Secondary battery, has not been preferable in applications requiting high output under high current rate conditions, such as automotive applications and applications in electric powder tools. Also, Patent Literature 2 describes a powdery material comprising a positive electrode active material, powder having an average particle Diameter of from 0.1 $\mu$m to 3 $\mu$m and a graphite powder having an average particle diameter of from 1 $\mu$m to 6 $\mu$m, for use in a secondary battery capable of exhibiting high output under high current rate conditions.

PRIOR ART LITERATURE

Patent Literature

   [Patent Literature 1]
   JP 11-40140 A
   [Patent Literature 2]
   JP 2008-084826 A

DISCLOSURE OF INVENTION

Even in the case of using the powdery material shown in Patent Literature 2 for the positive electrode of a nonaqueous electrolyte secondary battery, there has been room for improvement in the obtained secondary battery from the viewpoint of a high output characteristic under high current rate conditions. An object of the present invention is to provide a powdery material in a nonaqueous electrolyte secondary battery capable of exhibiting higher output under high current rate conditions.

When particles composing a positive electrode active material powder are fine particles as in the case of the positive electrode active material powder according to Patent Literature 2, the positive electrode active material powder is difficult to be homogeneously mixed with graphite powder since the particles weakly agglomerate with each other, and thus is difficult to decrease the internal resistance value of an obtained positive electrode.

The present inventors focused their attention on this point, and as a result found a powdery material that providers a positive electrode with lower internal resistance value even if particles constituting a Positive electrode active material powder are fine particles, and further found that an obtained nonaqueous electrolyte secondary battery is capable of exhibiting higher output under high current rate conditions.

The present invention providers the following means:

   <1> A powdery material comprising a positive electrode active material, powder which has an average particle diameter of from 0.05 $\mu$m to 1 $\mu$m and two or more types of graphite powders, wherein the average particle diameters of the two or more types of the graphite powders are different from each other and each of the graphite powders has an average particle diameter of from 0.01 $\mu$m to 20 $\mu$m.

<2> The powdery material according to <1>, wherein the two or more types of the graphite powder consist of a first graphite powder which has an average particle diameter of not less than 0.1 $\mu$m and less than 5 $\mu$m and a second graphite powder which has an average particles diameter of not less than 5 $\mu$m and not more than 20 $\mu$m.

<3> The powdery material according to <1> or <2>, wherein all graphite particles composing the two or more types of the graphite powder are scaly in shape.

<4> The powdery material according to any one of <1> to <3>, wherein a weight ratio of the graphite powders to 100 parts by weight of the positive electrode active material powder is from 1 part by weight to 30 parts by weight.

<5> The powdery material according to any one of <1> to <4>, wherein the positive electrode active material powders is a powder made of a lithium mixed metal oxide comprising Ni and Mn.

<6> The powdery material according to <5>, wherein the lithium mixed metal oxide is represented by the following formula (A):

$$Li_\alpha(Ni_{1-(x+y+z)}Mn_xFe_yCo_z)O_2 \qquad (A)$$

wherein $0<x<1$, $0\leq y<1$, $0\leq z<1$, $0<x+y+z<1$, and $0.5\leq\alpha\leq1.5$.

<7> A positive electrode mixture comprising the powdery material according to any one of <1> to <6>, a binder, and a solvent.

<8> The positive electrode mixture according to <7>, further comprising a non-graphitized carbonaceous material.

<9> The positive electrode obtained by applying the positive electrode mixture according to <7> or <8> to a current collector to yield an applied current collector and removing the solvent from the applied current collector.

<10> A nonaqueous electrolyte secondary battery comprising a positive electrode according to <9>, a negative electrode, and an electrolyte.

<11> The nonaqueous electrolyte secondary battery according to <10>, further comprising a separator.

<12> The nonaqueous electrolyte secondary battery according to <11>, wherein the separator is composed of a laminated film comprising a porous film and a heat resistant porous layer disposed thereon.

MODE FOR CARRYING OUT THE INVENTION

(Powdery Material)

The powdery material according to the present invention comprises a positive electrode active material powder having an average particle diameter of from 0.05 $\mu$m to 1 $\mu$m and two or more types of graphite powders, wherein the average particle diameters of the two or more types of graphite powder are different from each other and each of the graphite powder has an average particle diameter of from 0.01 $\mu$m to 20 $\mu$m.

The positive electrode active material powder is composed of primary particles and agglomerated particles of the primary particles, and the two or more types of graphite powder are also each composed of primary particles and agglomerated particles of the primary particles. Each average particle diameter of the positive electrode active material powder and the two or more types of graphite powder is measured using a D50 value determined by laser diffraction particle size distribution measurement. Measuring apparatuses for the laser diffraction particle size distribution measurement include a laser diffraction particle size analyzer (model: Mastersizer 2000) manufactured by Malvern Instruments Ltd. The powdery material according to the present invention is composed of the Positive electrode active material powder and the two or more types of graphite powder each having an average particle diameter in the above-described range, and therefore results in a nonaqueous electrolyte secondary battery capable of exhibiting a higher output under high current rate conditions, namely, a secondary battery superior in output characteristic.

The positive electrode active material powder preferably has an average particle diameter of from 0.08 $\mu$m to 0.8 $\mu$m, more preferably from 0.1 $\mu$m to 0.5 $\mu$m, from the viewpoint of balancing the discharge capacity and output characteristic of the nonaqueous electrolyte secondary battery at a high level. The positive electrode active material powder preferably has a BET specific surface area of not less than 2 $m^2$/g and not more than 30 $m^2$/g. From the viewpoint of further enhancing the output characteristic, the BET specific surface area of the positive electrode active material powder is more preferably not less than 3 $m^2$/g, further more preferably not less than 5 $m^2$/g. From the viewpoint of the filling property of the powdery material, the BET specific surface area of the positive electrode active material powder is more preferably not more than 15 $m^2$/g, further more preferably not more than 10 $m^2$/g.

From the viewpoint of more efficiently ensuring an electrical conduction path in the positive electrode, the two or more types of graphite powder preferably consist of a first graphite powder having an average particle diameter of not less than 0.1 $\mu$m and less than 5 $\mu$m and a second graphite powder having an average particle diameter of not less than 5 $\mu$m and not more than and 20 $\mu$m. Whereby, the discharge capacity of the nonaqueous electrolyte secondary battery is further increased. The positive electrode active material according to the present invention is composed of particles that are fine particles, in which positive electrode active material particles weakly agglomerate with each ether to be crumbled lightly with fingers or the like. In the prior art, even in the case of such weak agglomeration of a positive electrode active material powder, the internal resistance of a positive electrode is difficult to sufficiently decrease. In accordance with the present invention, the first graphite powder and the second graphite powder are used as the two or more types of graphite powders. Herein, the first graphite powder having a relatively small particle diameter acts to more efficiently ensure the electrical conduction path in the positive electrode, and the second graphite powder having relatively large particle Diameter acts to crumble the weak agglomeration of the positive electrode Active material powder. Thereby, the internal resistance in the Positive electrode Is further decreased, so that the discharge capacity and output characteristic of the obtained Nonaqueous electrolyte Secondary battery can be balanced at a high level. So that this effect is further enhanced, the first graphite powder preferably has an average particle Diameter of not less then 2 $\mu$m and not more than 4 $\mu$m, and the second graphite powder preferably has an average particle diameter of not less than 6 $\mu$m and not more than 10 $\mu$m. The first graphite powder preferably has a BET specific surface area of more than 15 m$^2$/g and not more than 25 m$^2$/g, and the second graphite powder preferably has a BET specific surface area of not less than 10 m$^2$/g and not more than 15 m$^2$/g.

All graphite particles constituting the two or more types of graphite powder are preferably scaly in shape. The scaly shapes of the graphite particles can further enhance the electrical conductivity of the positive electrode.

From the viewpoint of further increasing the capacity of the nonaqueous electrolyte secondary battery, the positive electrode active material powder is preferably a powder of a lithium mixed metal oxide containing Ni and Man. The lithium mixed metal oxide is preferably represented thy following formula (A):

$$Li_\alpha(Ni_{1-(x+y+z)}Mn_xFe_yCo_z)O_2 \qquad (A)$$

wherein 0<x<l, 0≤y<1, 0≤z<1, 0<x+y+z<1, and 0.5≤α≤1.5.

In formula (A), $\alpha$ is preferably not less than 0.95 and not more than 1.5, more preferably not less than 1.0 and not more than 1.4. From the viewpoint of, e.g., difficulty in obtaining Co, z is preferably 0. In accordance with the present invention, even if the positive electrode active material powder contains no Co, the high discharge capacity of the secondary battery can be achieved. In the case of z=0, the lithium mixed metal oxide is represented by the following formula (B):

$$Li_\alpha(Ni_{1-(x+y)}Mn_xFe_y)O_2 \qquad (B)$$

wherein 0<x<1, 0≤y<1, 0<x+y<1, and 0.5≤α≤1.5.

In formula (B), $\alpha$ is preferably not less than 0.95 and not more than 1.5, more preferably not less than 1.0 and not more than 1.4; x+y is preferably not less than 0.2 and not more than 0.7, more preferably not less than 0.3 and not more than 0.6; and y is preferably, not less than 0 and not more than 0.1, more preferably not less than 0.005 and not more than 0.1.

In formula (A) and formula (B), a quantity (mole) of Mn in the lithium mixed metal oxide is preferably larger than that (mole) of Ni from the viewpoint of enhancing the cyclability of the Nonaqueous electrolyte secondary battery. That is, it is preferable to satisfy the requirement of 1-(x+y+z)<x in formula (A) while it is preferable to satisfy the requirement of 1-(x+y)<x in formula (B).

From the viewpoint of further enhancing the advantageous effects of the present invention, the structure of the lithium mixed metal oxide is preferably an $\alpha$-NaFeO$_2$ type crystalline structure, namely, a crystalline structure belonging to the R-3m space group. The crystalline structure of the lithium mixed metal oxide may be identified from the powder X-ray diffraction pattern of the lithium mixed metal oxide obtained by powder X-ray diffraction measurement with CuK$\alpha$ as a radiation source.

Some of Li, Ni, Mn, Fe, or Co in the lithium mixed metal oxide may be substituted with another element. Herein, such other elements may include an element selected from B, Al, Ga, In, Si, Ge, Sn, Mg, Sc, Y, Zr, Hf, Nb, Ta, Cr, Mo, W, Ru, Rh, Ir, Pd, Cu, Ag, Zn, and the like.

A compound different from the lithium mixed metal oxide may also be adhered to the surfaces of the particles constituting the lithium mixed metal oxides. Such compounds may include compounds containing one or more elements selected from the group consisting of B, Al, Ga, In, Si, Ge, Sn, Mg, and transition metal elements, preferably compounds containing one or more elements selected from the group consisting of B, Al, Mg, Ga, In, and Sn, and more preferably compound of Al. More specific compounds include the oxides, hydroxides, oxyhydroxides, carbonates, nitrates, and organic acid salts of the elements, preferably, the oxides, hydroxides, and oxyhydroxides of the elements. The compounds may be mixed. Among the compounds, a particularly preferable compounds is alumina. The compounds may also be adhered and thereafter heated.

The powdery material according to the present invention comprises preferably from 1 to 30 parts by weight, more preferably from 2 to 20 parts by weight of the graphite powder, relative to 100 parts by weight of the positive electrode active material powder. As a weight ratio between the first graphite powders and the second graphite powder, the weight ratio of the first graphite powder/the second graphite powder is preferably from 20/80 to 80/20, more preferably from 30/70 to 70/30.

The powdery material according to the present invention may further comprise a non-graphitized carbonaceous material. Such non-graphitized carbonaceous materials may include carbon blacks, acetylene blacks, and the like. The powdery material according to the present invention may further comprise a fibrous carbonaceous material.

(Method for Producing Positive Electrode Active Material Powder)

A method for producing a positive electrode active material powder in accordance with the present invention is specifically described below. As an example thereof, a method for producing a lithium mixed metal oxide powder containing Ni and Mn is described.

The powders of the lithium mixed metal oxide containing Ni and Mn may be produced by calcining a mixture of a coprecipitate and a lithium compound, retained at a temperature of not than 900°C. The coprecipitate is obtained by bringing an aqueous solution containing Ni, Mn, and Cl, and, as needled, Fe and Co (hereinafter also referred to as "first aqueous solution") into contact with an alkali. The coprecipitate may also be obtained as a coprecipitate powder at the time of the contact but is preferably obtained as a coprecipitate slurry. The form of the obtained coprecipitate depends on the concentrations of Ni, Mn, Fe, and Co in the first aqueous solution and the form (aqueous solution form or solid) of the alkali brought into contact with the first aqueous solution. Substances or methods as described below may be used for the first aqueous solutions, the alkali, a method for bringing the first aqueous solution into contact with the alkali, a methods for mixing the lithium compound with the coprecipitate, a methods for calcining the mixture, ant the like.

Mixing may also be performed in place of the coprecipitation. In this case, the positive electrode active material powders may be produced by calcining a metal compound mixture. That is, first, compounds each containing a corresponding metal element are weighed to have a prescribed composition and then are mixed to obtain the metal compound mixture. Then, the positive electrode active material powder may be produced by calcining the metal compound mixture. For a method for producing the powder of the lithium mixed metal oxide as the positive electrode active material powder used in the present invention, a method comprising the step of obtaining the coprecipitate more easily offer powder characteristic of interest and is more preferable.

The method for producing the powder of the lithium mixed metal oxide, comprising the step of obtaining the coprecipitate, is described below. The method for producing the powder of the lithium mixed metal oxide preferably, comprises the following steps (1), (2), and (3) in this order:

(1) the step of bringing a first aqueous solution into contact with an alkali to obtain a coprecipitate slurry;
(2) the step of obtaining the coprecipitate from the coprecipitate slurry; and
(3) the step of retaining a mixture, obtained by mixing the coprecipitate with a lithium compound, at a temperature of not more than 900°C, thereby calcining the mixture to obtain the lithium mixed metal oxide.

In the above-mentioned step (1), the first aqueous solution is preferably an aqueous solution obtained by using respective chlorides as respective raw materials containing Ni and Mn, and, as needed, Fe and Co to dissolve the chloride of Ni and the chloride of Mn, and, as needed, the chloride of Fe and the chloride of Co in water. The chloride of Fe is preferably a chloride of divalent Fe. When each raw material is difficult to dissolve in water, for example, when the raw materials are oxides, hydroxides, or metallic materials, the raw materials may be dissolved in an aqueous solution containing hydrochloric acid and hydrochloric acid to obtain the first aqueous solutions. The first aqueous solution contains Ni and Mn, and, as needed, Fe and Co to have prescribed molar ratios, namely, the molar ratios in formula (A) or formula (B).

In step (1), such alkalis may include one or more elected from the group consisting of LiOH (lithium hydroxide), NaOH (sodium hydroxide), KOH (potassium hydroxide), $Li_2CO_3$ (lithium carbonate), $Na_2CO_3$ (sodium carbonate), $K_2CO_3$ (potassium carbonate), and $(NH_4)_2CO_3$ (ammonium carbonates), which may be anhydrides or hydrates. In step (1), the alkalis are preferably dissolved in water to use the resultant as an aqueous alkaline solution. Such aqueous alkaline solutions may also include ammonium water. An alkali concentration in the aqueous alkaline solution is usually around 0.5-10 M, preferably around 1-8 M. In terms of a manufacturing cost, the anhydrides and/or hydrates of NaOH or KOH are preferably used as the alkalis. Two or more alkalis as described above may also be used together.

Examples of the contact process in step (1) may include a process of adding an aqueous alkaline solution to the first aqueous solution to mix the resultant; a process of adding the first aqueous solutions to an aqueous alkaline solution to mix the resultant; and a process of adding the first aqueous solution and an aqueous alkaline solutions to water to mix the resultant. The mixing of them is preferably performed by stirring. Among the above-mentioned contact processes, particularly, the process of aiding the first aqueous solution to the aqueous alkaline solution to mix the resultant may preferably be used in terms of easily keeping a pH change. In this case, with adding the first aqueous

EP 2 463 939 A1

solution to the aqueous alkaline solutions to mix the resultant, the pH of the liquid mixture tends to decrease. The first aqueous solution may also be added while adjusting the pH of the liquid mixture to 9 or more, preferably 10 or more. The first aqueous solution and the aqueous alkaline solution are preferably brought into contact with each other while retaining either or both of the aqueous solutions at a temperature of 40°C to 80°C, thereby being able to obtain the coprecipitate with more homogeneous composition. In step (1), the coprecipitate may be generated to obtain the coprecipitate slurry as described above.

In step (2), the coprecipitate is obtained from the above-mentioned coprecipitate slurry. Although step (2) may be performed by any process if the coprecipitate can be obtained, a process by solid-liquid separation such as filtration is preferably used from the viewpoint of ease of handle. The coprecipitate may also be obtained by a process of hefting the coprecipitate slurry to volatilize liquid, for example, spray drying.

When, the coprecipitate is obtained by the solid-liquid separation in step (2), step (2) is preferably the following step (2'):

(2') the step of performing solid-liquid separation of the coprecipitate slurry, followed by washing and drying the resultant to obtain the coprecipitate.

In step (2'), when an alkali and Cl are excessively present in a solid obtained after the solid-liquid separation, they can be by washing. In a sense that the solid is efficiently washed, it is preferable to use water as a washing liquid. As needed, a water-soluble organic solvent such as alcohol or acetone may also be to the liquid. The washing may also be performed twice or more, and, for example, washing with water may also be carried out, followed by washing with a water-soluble organic solvent as described above again.

In step (2'), the washing is performed, followed by performing the drying to obtain the coprecipitate. The drying is usually performed by heat treatment and may also be performed by blast drying, vacuum drying, etc. When the drying is performed by the heat treatment, a heat treatment temperature is usually 50-300°C, preferably around 100°C to 200°C.

In step (3), the mixture obtained by mixing the coprecipitate obtained as described above with the lithium compound is calcined to obtain the powder of the lithium mixed metal oxide, namely, a positive electrode active material powder. Such lithium compounds may include the anhydrides and/or hydrates of one or more selected from the group consisting of lithium hydroxide, lithium chloride, lithium nitrate, and lithium carbonate. Although the mixing may be either dry mixing or wet mixing, the dry mixing is preferable from the viewpoint of simpleness. Mixing apparatuses may include stirring mixers, V-type mixers, w-type mixers, ribbon mixers, drum mixers, ball mills, and the like.

The retention temperature in the calcination is an important factor in a sense that the average particle diameter of the powder of the lithium mixed metal oxide, namely, the positive electrode active material powder is adjusted. The average particle diameter usually tends to increase as the retention temperature increases. The retention temperature is preferably 650°C or more and 900°C or less. Retention time at the retention temperature is usually 0.1 hour to 20 hours, preferably 0.5 hour to 8 hours. A rate of temperature increase to the retention temperature is usually 50°C/hour to 400°C/hour, and a rate of temperature decrease from the retention temperature to room temperature is usually 10°C/hour to 400°C/hour. Atmospheres for the calcination include ambient air, oxygen, nitrogen, argon, or mixed gases thereof, and an ambient atmosphere is preferable.

In the case of the calcination, the mixture may also contain a reaction accelerator. Such reaction accelerators may specifically include chlorides such as NaCl, KCl, and $NH_4Cl$, fluorides such as LiF, NaF, KF, and $NH_4F$ (ammonium fluoride), boric acid, and preferably the above-mentioned chlorides, and KCl is preferable. The incorporation of the reaction accelerator into the mixture may improve reactivity during calcining the mixture to be able to adjust the average particle diameter of the lithium mixed metal oxide, namely, the positive electrode active material powder. Normally, the average particle diameter tends increased as the content of the reaction accelerator in the mixture increases when the retention temperature during the calcination is constant. Two or more reaction accelerators may also be used. When the coprecipitate is mixed with the lithium compound, the reaction accelerator may be added and mixed together with them. The reaction accelerator may remain in the lithium mixed metal oxide after the calcination or may be removed by, e.g., washing the lithium mixed metal oxide after the calcination or evaporating the reaction accelerator.

The powder of the lithium mixed metal oxide obtained after the calcination, namely, the positive electrode active material powder may also be ground by a ball mill or a jet mill. The average particle diameter of the positive electrode active material powder may be able to be adjusted by the grinding. The grinding and the calcination may also be repeated twice or more. The positive electrode active material powder may also be washed or classified as needed.

The positive electrode active material powder having an average particle diameter of not less than 0.05 $\mu$m and not more than 1 $\mu$m may be obtained by the above-mentioned procedure.

(Method for Producing Powdery Material)

A method for producing the powdery material according to the present invention is described below.

6

The powdery material according to the present invention may be produced by mixing the positive electrode active material powder having an average particle diameter of from 0.05 $\mu$m to 1 $\mu$m with the two or more graphite powders. The mixing may be performed using an apparatus such as a V-type mixer, a W-type mixer, a ribbon mixer, a drum mixer, or a dry ball mill. From the viewpoint of preventing the grinding of the powdery material from proceeding, the V-type mixer, the W-type mixer, the ribbon mixer, or the drum mixer is preferable.

The powdery material may also further comprise a non-graphitized carbonaceous material. Examples of the non-graphitized carbonaceous material may include carbon blacks, acetylene blacks, etc. Although electrical conductivity in a positive electrode can be increased to improve the discharge and charge efficiency and rate characteristic of an obtained secondary battery by the incorporation of the non-graphitized carbonaceous material into the powdery material since the non-graphitized carbonaceous material such as carbon black or acetylene black has fine particles and a large surface area, excessive incorporation deteriorates binding between a positive electrode mixture and a positive electrode current collector as described above and actually causes the internal resistance of the positive electrode to be increased. Therefore, when the powdery material contains the non-graphitized carbonaceous material, the graphite powders and the non-graphitized carbonaceous material are preferably not less than 2 parts buy weight and not more than 20 parts by weight relative to 100 parts by weight of the positive electrode active material powder. The powdery material may also contains a fibrous carbonaceous material. Examples of the fibrous carbonaceous material may include graphitized carbon fibers and carbon nanotubes. The carbon nanotube may be either a single-wall or multi-wall carbon nanotube. For the fibrous carbonaceous material, a commercially available product may be ground and used. The grinding may be performed by either a dry or wet grinding method. Dry grinding includes grinding by a ball mill, a rocking mill, or a planetary ball mill, and wet grinding includes grinding by a ball mill or Dispermat. When the fibrous carbonaceous material is contained, the content thereof is normally not less than 0.1 parts by weight and not more than 10 parts by weight relative to 100 parts by weight of the positive electrode active material powder. The non-graphitized carbonaceous material and the fibrous carbonaceous material may be mixed together when the positive electrode active material powder and the two or more types of graphite powders are mixed or may be added and mixed when a positive electrode mixture as described below is produced.

(Positive Electrode Mixture and Positive Electrode)

The positive electrode mixture according to the present invention is described below. The positive electrode mixture according to the present invention comprises the powdery material, the binder, and the solvents.

At the binder in the positive electrode mixture according to the present invention, a thermoplastic resin may be used. Examples of the thermoplastic resin specifically include fluorine resins such as polyvinylidene fluoride (hereinafter may be referred to as PVdF), polytetrafluoroethylene (hereinafter may be referred to as PTFE), a tetrafluoroethylene-hexafluoropropylene-vinylidene fluoride copolymer, a hexafluoropropylene-vinylidene fluoride copolymer, sand a tetrafluoroethylene-perfluorovinylether copolymer; and polyolefin resins such as polyethylene and polypropylene. Two or more of these thermoplastic resins may also be mixed. The positive electrode mixture preferably contains a fluorine resin and a polyolefin resin as the binders so that the content of the fluorine resin to the positive electrode mixture is 1-10% by weight and the content of the polyolefin resin is 0.1-2% by weight, thereby being able to obtain the positive electrode mixture excellent in a binding property with the current collector. The binder dissolved or dispersed in a solvent as described below may be used.

Examples of the solvent in the positive electrode mixture according to the present invention include amine solvents such as N,N-dimethylaminopropylamine and diethylenetriamine; ether solvents such as tetrahydrofuran; ketone solvents such as methyl ethyl ketone; ester solvents such as methyl acetate; and amide solvents such as dimethylacetamide and 1-methyl-2-pyrrolidone (hereinafter may be referred to as NMP).

Such methods for producing the positive electrode mixture according to the present invention may include methods the described below. That is, such methods may includes: a method of mixing the powdery materials and the binder with the solvent; and a method of mixing the positive electrode active material powder with the two or more graphite powders, the binder, and the solvent. The binder may also be dissolved in the solvent. The mixing of them may be simultaneous mixing or successive mixing. The non-graphitized carbonaceous material and the fibrous carbonaceous material may also be added and mixed simultaneously with the mixing of them.

A positive electrode may be obtained by applying the above-mentioned positive electrode mixture to a current collector to obtain an applied current collector and by removing a solvent from the applied current collector. Examples of the current collector (hereinafter also referred to as positive electrode current collector) include Al, Ni, stainless steel, etc. Al is preferable since it is easily processed on a thin film and is inexpensive. A Positive electrode mixture component may also be adhered to the positive electrode current collector by, e.g., a method of applying the positive electrode mixture to the positive electrode current collector and removing a solvent, followed by pressing. Such methods of applying the positive electrode mixture to the positive electrode current collector include, e.g., a die coating method, a screen coating method, a curtain coating method, a knife coating method, a gravure coating method, an electrostatic spray method, etc.

(Nonaqueous Electrolyte Secondary Battery)

A nonaqueous electrolyte secondary battery comprising the positive electrode is described below. The nonaqueous electrolyte secondary battery comprises the positive electrode, a negative electrode, and an electrolyte, and further comprises a separator as needed. Examples of the battery include a lithium secondary battery.

The lithium secondary battery can be produced by housing an electrode group, which is obtained by laminating or laminating and winding a separator, a negative electrode, a separator, and the positive electrode, in a battery case such has a battery can, followed by Injecting an electrolytic solution comprising an organic solvent containing an Electrolyte into the case.

A shape of the electrode group may include, for example, a cross section obtained by cutting the electrode group in a direction vertical to a wingding axis which is in the shape of a circle, an eclipse, a rectangle, a chamfered rectangle, etc. In addition, the shapes of batteries may be, for example, parer, coin, cylinder, and square-type shapes, etc.

(Negative Electrode of Nonaqueous Electrolyte Secondary Battery)

It is essential only that the negative electrode be capable of being doped and dedoped with lithium ions at a lower electric potential than that of the positive electrode in a Nonaqueous electrolyte secondary battery, and the negative electrode may include an electrode in which a negative electrode mixture component containing a negative electrode material is supported on a negative electrode current collector or an electrode comprising a negative electrode material alone. Such negative electrode materials include carbonaceous materials, chalcogen compounds (such as oxides and sulfides), nitrides, metals, or alloys, which are materials capable of being doped and dedoped with lithium ions at a lower electric potential than that of the positive electrode. Two or more negative electrode materials may also be mixed and used.

Examples of the negative electrode material are described below. Such carbonaceous materials as described above may specifically include graphites such as natural graphites and artificial graphites, cokes, carbon blacks, pyrolytic carbons, carbon fibers, calcined organic polymer compounds, and the like. Such oxides as described above may specifically include oxides of silicon, represented by formula $SiO_x$ wherein x is a positive real number, such as $SiO_2$ and SiO; oxides of titanium, represented by formula $TiO_x$ wherein x is a positive real number, such as $TiO_2$ and TiO; oxides of vanadium, represented by formula $VO_x$ wherein x is a positive real number, such as $V_2O_5$ and $VO_2$; oxides of iron represented by formula $FeO_x$ wherein x is a positive real number, such as $Fe_3O_4$, $Fe_2O_3$, and FeO; oxides of tin, represented by formula $SnO_x$ wherein x is a positive real number, such as $SnO_2$ and SnO; oxides of tungsten, represented by general formula $MO_x$ wherein x is a positive real number, such as $WO_3$ and $WO_2$; mixed metal oxides containing lithium and titanium and/or vanadium, such as $Li_4Ti_5O_{12}$ and $LiVO_2$ (including $Li_{1.1}V_{0.9}O_2$); and the like. Such sulfides as described above may specifically include sulfides of titanium, represented by formula $TiS_x$ wherein x is a positive real number, such as $Ti_3S_3$, $TiS_2$, and TiS; sulfides of vanadium, represented by formula $VS_x$ wherein x is a positive real number, such as $V_3S_4$, $VS_2$, and VS; sulfides of iron, represented by formula $FeS_x$ wherein x is a positive real number, such as $Fe_3S_4$, $FeS_2$, and FeS; sulfides of molybdenum, represented by formula $MoS_x$ wherein x is a positive real number, such as $MO_2S_3$ and $MoS_2$; sulfides of tin, represented by formula $SnS_x$ wherein x is a positive real number, such as $SnS_2$ and SnS; sulfides of tungsten, represented by formula $WS_x$ x is a positive real number, such as $WS_2$; sulfides of antimony, represented by formula $SbS_x$ wherein x is a positive real number, such as $Sb_2S_3$; sulfides of selenium, represented by formula $SeS_x$ x is a positive real number, such as $Se_5S_3$, $SeS_2$, and SeS; and the like. Such nitrides as described above may specifically include lithium-containing nitrides such as $Li_3N$, $Li_{3-x}A_xN$ wherein A is Ni and/or Co; and $0<x<3$. The carbonaceous materials, the oxides, the sulfides, and the nitrides may be used in combination of two or more kinds. They may be either crystalline or amorphous. In addition, the carbonaceous materials, the oxides, the sulfides, and the nitrides are generally supported on a negative electrode current collector, which is used as an electrode.

Such metals as described above specifically include lithium metals, silicon metals, and tin metals. Such alloys as described above may include lithium alloys such as Li-Al, Li-Ni, and Li-Si; silicon alloys such as Si-Zn; and tin alloys such as Sn-Mn, Sn-Co, Sn-Ni, Sn-Cu, and Sn-La, and may also include alloys such as $Cu_2Sb$ and $La_3Ni_2Sn_7$. These metals and alloys are generally used alone as an electrode (for Example, used in foil form).

In the above-mentioned negative electrode materials, a carbonaceous material containing a graphite such as a natural graphite or an artificial graphite as the main component is preferably used from the viewpoint of the high potential flatness, low average discharge potential, good cyclability, and the like of an obtained battery. As the shape of the carbonaceous material, for example, any of flake shapes such as those of natural graphites, spherical shapes such as those of mesocarbon microbeads, fibrous shapes such as those of graphitized carbon fibers, aggregates of fine powders, and the like, may be used.

The negative electrode mixture may contain a binder as needed. Such binders may include thermoplastic resins and may specifically include PVdF, thermoplastic polyimide, carboxymetylcellulose (hereinafter also referred to as CMC), polyethylene, polypropylene, and the like.

Such negative electrode current collectors as described above may include Cu, Ni, stainless steel, and the like, and Cu may advantageously be used in terms of difficulty of making an alloy with lithium and easiness of professing into a thin film. Methods of supporting a negative electrode mixture component on the negative electrode current collector, which are similar with the case of the above-mentioned positive electrode, include a method by pressure molding, a method of pasting a negative electrode mixture component using a solvent, etc., applying the resultant paste on a negative electrode current collector to obtain an applied currant collector, removing a solvent from the applied current collector by drying, and thereafter pressing to obtain contact bonding thereof, and the like.

(Separator for Nonaqueous Electrolyte Secondary Battery)

As the separator, for Example, there may be used a member having a form of a porous membrane, a non-woven fabric, a woven fabric, or the like, comprising a material such as a polyolefin resin such as polyethylene or polypropylene, a fluorine resin, or a nitrogen-containing aromatic polymer. The separators may comprise two or more materials or the member may be laminated thereon. Such separators may also include separators described in, e.g., JP 2000-30686 A, JP 10-324758 A, and the like. It is more advantageous that the thickness of the separator is thinner provided that mechanical strength is maintained, from the viewpoint of increase in the volume energy density of a battery and decrease in the internal resistance thereof, and it is usually around 5-200 $\mu$m, preferably around 5-40 $\mu$m.

The separator preferably has a porous film containing a thermoplastic resin. In the nonaqueous electrolyte secondary battery, the separator is placed between the positive electrode and the negative electrode. The separator preferably has a function by which, when an abnormal current flows in the battery usually because of short-cut between a Positive electrode and a negative electrode, and the like, the current is interrupted to block (shutdown) the flow of excessive current. Herein, the shutdown, is performed by blockading the micropores of the porous film in the separator in the case of exceeding usual working temperature. It is preferable that, after the shutdown, even if the temperature in the battery increases to a certain high temperature, membrane destruction should not occur at the temperature and a shutdown, state be maintained. Such separators includes a porous film and a laminated film having a heat resistant porous layer laminated thereon. The heat resistance of the secondary battery according to the present invention can be further enhanced by using the film as the separator. Herein, the heat resistant porous layer may also be laminated on both surfaces of the porous film.

The porous film and the laminated film having the heat resistant porous layer laminated thereon are described below.

In the laminated film, the heat resistant porous layer is a layer having higher heat resistance than that of the porous film, and the heat resistant porous layed may be formed from an inorganic powder or may contain a heat resistant resin. Since the heat resistant porous layer contains a heat resistant resin, the heat resistant porous layer can be formed by an easy procedure such as coating. Such heat resistant resins may include polyamide, polyimide, polyamideimide, polycarbonate, polyacetal, polysulfone, polyphenylene sulfide, polyetherketone, aromatic polyester, polyethersulfone, and polyetherimide, and, from the viewpoint of further enhancing heat resistance, polyamide, polyimide, polyamideimide, polyethersulfone, and polyetherimide are preferable, and polyamide, polyimide, and polyamideimide are more preferable. Further more preferable are nitrogen-containing aromatic polymers such as aromatic polyimides (para-oriented aromatic polyamide, meta-oriented aromatic polyamide), aromatic polyimides, and aromatic polyamideimides, especially preferable are aromatic polyamides, and, in terms of production, particularly preferable is para-oriented aromatic polyamide (hereinafter may be referred to as "para-aramid"). Such heat resistant resins also include poly-4-methylpentene-1 and cyclic olefin polymers. By using these heat resistant resins, the heat resistance of the laminated film, namely, the thermal membrane destruction temperature of the laminated film can be further enhanced. When a nitrogen-containing aromatic polymer among these heat resistant resins is used, compatibility with an electrolytic solutions may be good due to polarity in its molecule, and, in this case, the liquid retaining property of the electrolytic solution in the heat resistant porous layer is improved. Thereby, a rate of infection of the electrolytic solution is increased in production of the nonaqueous electrolyte secondary battery, and the discharge and charge capacity of the nonaqueous electrolyte secondary battery is also further increased.

The thermal membrane destruction temperature of the laminated film depends on the kind of a heat resistant resin and is selected and used according to a use situation and a use purpose. More specifically, the thermal membrane destruction temperature may be controlled to around 400°C, to around 250°C, and to around 300°C, when, as heat resistant resins, the above-mentioned nitrogen-containing aromatic polymer, poly-4-methylpentene-1, and cyclic olefin polymer are used, respectively. When the heat resistant porous layer comprises an inorganic powder, the thermal membrane destruction temperature may also be controlled to, for example, 500°C or more.

The above-mentioned para-aramid is obtained by condensation polymerization of a para-oriented aromatic diamine and a para-oriented aromatic dicarboxylic halide and consists substantially of a repeating unit in which an amide bond is bound at a para-position or according orientation position of an aromatic ring (for example, orientation position expending coaxially or in parallel to the reverse direction, such as 4,4'-biphenylene, 1,5-naphthalene, or 2,6-naphthalene). Specifically, examples thereof include para-aramids having a para-orientation type structure or a structure according to the para-orientation type, such as poly(para-phenyleneterephthalamide), poly(para-benzamide), poly(4,4'-benzanilideterephthalamide), poly(paraphenylene-4,4'-biphenylPnedicarboxylic amide), poly(paraphenylene-2,6-naphthalenedicarboxylic amide), poly(2-chloro-para-phenyleneterephthalamide), and para-phenyleneterephthalamide/2,6-dichloro-para-phenyleneterephthalamide copolymers.

Such aromatic polyimides as described above are preferably all aromatic polyimides produced by condensation polymerization of aromatic dianhydrides and diamines. Specific examples of the dianhydrides include pyromellitic dianhydride, 3,3',4,4'-diphenylsulfone tetracarboxylic dianhydride, 3,3',4,4'-benzophenone tetracarboxylic dianhydride, 2,2'-bis(3,4-dicarboxyphenyl)hexafl.aoropropane, 3,3',4,4'-biphenyltetracarboxylic dianhydride, and the like. Specific examples of the diamines include oxydianiline, para-phenylenediamine, benzophenonediamine, 3,3'-methylenedianiline, 3,3'-diaminobenzophenone, 3,3'-diaminodiphenylsulfone, 1,5-naphthalenediamine, and the like. Also, solvent-soluble polyimides may preferably be used. Such polyimides include, for example, a polyimide which is a polycondensate of 3,3', 4,4'-diphenylsulfone tetracarboxylic dianhydride and an aromatic diamine.

Such aromatic polyamideimides as described above include those obtained by condensation polymerization of an aromatic dicarboxylic acid and an aromatic diisocyanate and those obtained by condensation polymerization of an aromatic dianhydride and an aromatic diisocyanate. Specific examples of the aromatic dicarboxylic acid include isophthalic acid, terephthalic acid, and the like. Specific examples of the aromatic dianhydride include trimellitic anhydride and the like. Specific examples of the aromatic diisocyanate include 4,4'-diphenylmethane diisocyanate, 2,4-tolylene diisocyanate, 2,6-tolylene diisocyanate, ortho-tolylane diisocyanate, m-xylene diisocyanate, and the like.

So that permeability is further enhanced, the thickness of the heat resistant porous layer is preferably thin and preferably not less than 1 $\mu$m and not more than 10 $\mu$m, more preferably not less than 1 $\mu$m and not more than 5 $\mu$m, and even more preferably not less than 1 $\mu$m and not more than 4 $\mu$m. The heat resistant porous layer has micropores, of which the sizes (diameters) are usually not more than 3 $\mu$m, preferably not more than 1 $\mu$m. When the heat resistant porous layer contains a heat resistant resin, the heat resistant porous layer may further contain fillers as described below.

In the laminated film, the porous film preferably has micropores and a shutdown, function. In this case, the porous film contains a thermoplastic resin. The porous film has a micropore size of usually not more than 3 $\mu$m, preferably not more than 1 $\mu$m. The porous film has a porosity of usually 30-80% by volume, preferably 40-70% by volume. In the nonaqueous electrolyte secondary battery, in the case of exceeding usual working temperature, the porous film containing a thermoplastic resin is capable of blockading micropores by softening of the thermoplastic resin composing the film.

As the thermoplastic resin, those which are not dissolved in an electrolytic solution in a nonaqueous electrolyte secondary battery may advantageously be selected. Specifically, mention may be made of polyolefin resins, such as polyethylene and polypropylene, and thermoplastic polyurethane resins, and a mixture of two or more thereof may also be used. From the viewpoint of softening at lower temperature to attain shutdown, the porous film preferably contains a polyethylene. Such polyethylenes may specifically include low density polyethylenes, high densely polyethylenes, and linear polyethylenes, and may also include ultrahigh-molecular weight polyethylenes having a molecular weight of not less than 1,000,000. From the viewpoint of further enhancing the puncture strength of a porous film, the thermoplastic resin composing the film preferably contains an ultrahigh-molecular weight polyethylene. In terms of production of a porous film, the thermoplastic resin may also preferably contain a wax comprising a polyolefin having a low molecular weight (weight average molecular weight of not more than 10,000).

The thickness of a porous film in a laminated film is usually 3-30 $\mu$m, preferably 3-25 $\mu$m, and more preferably 3-19 $\mu$m. In accordance with the present invention, the thickness of the laminated film is usually not more than 40 $\mu$m, preferably not more than 30 $\mu$m, and more preferably not more than 20 $\mu$m. Provided that the thickness of the heat resistant porous layer is A ($\mu$m) and the thickness of the porous film is B ($\mu$m), a value of A/B is preferably not less than 0.1 and not more than 1.

When a heat resistant porous layer contains a heat resistant resin, the heat resistant porous layer may also contain one or more fillers. The filler may be one or more selected from organic powders, inorganic powders, and mixtures thereof. Particles composing the filler preferably have an average particle diameter of not less than 0.01 $\mu$m and not more than 1 $\mu$m.

The organic powders include powders comprising organic matters, for example, styrene, vinyl ketone, acrylonitrile, methyl methacrylate, ethyl methacrylate, glycidyl methacrylate, glycidyl acrylate, and methyl acrylate, singly, or copolymer of two or more of these compounds; fluorinated resins such as polytetrafluoroethylene, a tetrafluoroethylene-hexafluoropropylene copolymer, a tetrafluoroethylene-ethylene copolymer, and polyvinylidene fluorine; melamine resins; urea resins; polyolefins; and polymethacrylate. These organic powders may be used singly or in admixture of two or more. Among these organic powders, a polytetrafluoroethylene powder is preferable in terms of chemical stability.

The inorganic powder includes powder comprising inorganic matters, for example, metal oxides, metal nitrides, metal carbides, metal hydroxides, carbonates, and sulfates, and, among them, powder comprising inorganic substances having low electrical conductivities is preferably used. Specific examples thereof include a powder comprising alumina, silica, titanium dioxide, calcium carbonate, and the like. The inorganic powder may be used singly or in admixture of two or more. Among the inorganic powder, alumina powder is preferable in terms of chemical stability. All particles composing the filler are more preferably alumina particles, and, more preferably, all particles composing the filler are alumina particles and some or all of them are approximately spherical alumina particles. When the heat resistant porous layer is formed from inorganic powder, the above-mentioned inorganic powders may advantageously be used, and, as needed, a binder may be advantageously mixed into the resultant.

The content of a filler when the heat resistant porous layer contains a heat resistant resin depends on the specific gravity of the material of the filler, and for example, when all particles composing the filler are alumina particles, the weight of the filler is usually not less than 5 and not more than 95 parts by weight, preferably not less than 20 and not more than 95 parts by weight, and more preferably not less than 30 and not more than 90 parts by weight, relative to 100 parts by weight of the heat resistant porous layer. These ranges may appropriately be depending on the specific gravity of the material of the filler.

Filler include approximately spherical, plate shapes, column, needle, whisker, fibrous shapes, etc. However, any particles may be used, approximately spherical particles are preferable since uniform pores are easily formed. The approximately spherical particles include particles having a particle aspect ratio (particle longer diameter/particle shorter diameter) of not less than 1 and not more that 1.5. The particle aspect ratio can be determined by an electron micrograph.

In a secondary battery, a separator has an air permeability according to the Gurley method of preferably from 50 to 300 spec/100 cc, further preferably 50-200 sec/100 cc, from the viewpoint of combination with ion permeability. The separator has a porosity of usually 30-80% by volume, preferably 40-70% by volume. The separator may also be a laminate of separators with different porosities.

(Electrolytic Solution or Solid Electrolyte of Nonaqueous Electrolyte Secondary Battery)

In a secondary battery, an electrolytic solution usually comprises an organic solvent containing an electrolyte. Examples of the electrolyte include lithium salts such as $LiClO_4$, $LiPF_6$, $LiAsF_6$, $LiSbF_6$, $LIBF_4$, $LiCF_3SO_3$, $LiN(SO_2CF_3)_2$, $LiN(SO_2C_2F_5)_2$, $LiN(SO_2CF_3)(COCF_3)$, $Li(C_4F_9SO_3)$, $LiC(SO_2CF_3)_3$, $Li_2B_{10}Cl_{10}$, LiBOB wherein BOB refers to bis(oxalato)borate, lower aliphatic carboxylic acid lithium salts, and $LiAlCl_4$, and a mixture of two or more thereof may also be used. Among them, at least one fluorine-containing lithium salt selected from the group consisting of $LiPF_6$, $LiAsF_6$, $LiSbF_6$, $LiBF_4$, $LiCF_3SO_3$, $LiN(SO_2CF_3)_2$, and $LiC(SO_2CF_3)_3$ is usually used.

In the electrolytic solution, as the organic solvent, there may be used, for example, carbonates such as propylene carbonate, ethylene carbonate (hereinafter may be referred to as EC), dimethyl carbonates (hereinafter may be referred to as DMC), diethyl carbonate, ethyl methyl carbonate (hereinafter may be referred to as EMC), 4-trifluoromethyl-1,3-dioxolan-2-one, and 1,2-di(methoxycarbonyloxy)ethane; ethers such as 1,2-dimethoxyethane, 1,3-dimethoxypropane, pentafluoropropyl methyl ether, 2,2,3,3-tecrafluoropropyl difluoromethyl ether, tetrahydrofuran, and 2-methyltetrahydrofuran; esthers such as methyl formate, methyl acetate, and γ-butyrolactone; nitriles such as acetonitrile and butyronitrile; amides such as N,N-dimethylformamide and N,N-ciimethylacef-amide; carbamates such as 3-methyl-2-oxazolidinone; sulfur-containing compounds such as sulfolane, dimethylsulfoxide, and 1,3-propanesultone, or compounds obtained by further introducing a fluorine substituent into the above-mentioned organic solvents. Usually, a mixed solvents in which two or more organic solvents among them are mixed is used. In particular, mixed solvents containing carbonates are preferable, and mixed solvents of cyclic carbonates and non-cyclic carbonates or cyclic carbonates and ethers are further preferable. As the mixed solvents of cyclic carbonates and non-cyclic carbonates, mixed solvents containing EC, DMC, and EMC are preferable in terms of a wide operating temperature range, an excellent load characteristic, and difficult degradability even in the case of using a graphite material such as natural graphite or artificial graphite as an active material for a negative electrode. Electrolytic solutions containing organic solvents having fluorine-containing lithium salts such as $LiPF_6$ and a fluorine substituent are preferably used in terms of offering a particularly superior safety improvement effect. Mixed solvents containing: ethers having a fluorine substituent such as pentafluoropropyl methyl ether and 2,2,3,3-tetrafluoropropyl difluoromethyl ether; and DMC are also superior in a large current discharge characteristic and are further preferable.

Instead of the above-mentioned electrolytic solution, a solid electrolyte may also bye used. As the solid electrolyte, for example, organic polymer electrolytes such as polyethylene oxide-based polymers and polymers containing at least one or more of a polyorganosiloxane chain and/or a polyoxyalkylene chain may be used. So-called gel-type electrolytes obtained by allowing an electrolytic solution to be supported on a polymer may also be used. Inorganic solid electrolytes containing sulfides such as $Li_2S$-$SiS_2$, $Li_2S$-$GeS_2$, $Li_2S$-$P_2S_5$, $Li_2S$-$B_2S_3$, $Li_2S$-$SiS_2$-$Li_3PO_4$, and $Li_2S$-$SiS_2$-$Li_2SO_4$ may also be used. Using these solid electrolytes, safety may be further enhanced. In the nonaqueous electrolyte secondary battery according to the present invention, the solid electrolyte may play a role as a separator when a solid electrolyte is used; and no separator may be needed in these cases.

EXAMPLES

The present invention is described below in more detail by way of Examples. Particle size distribution measurement, measurement of a BET specific surface area, and powder X-ray diffraction measurement in each powder were performed according to methods as described below.

(1) Measurement of Average Particle Diameter of Positive Electrode Active Material Powder

Using a laser diffraction particle size analyzer (model: Mastersizer 2000, manufactured by Malvern Instruments Ltd.), D50 ($\mu$m) of a positive electrode active material powder was measured, and this value was regarded as an average particle diameter.

(2) Measurement of Average Particle Diameter of Graphite Powder

Using the laser diffraction particle size analyzer (model: Mastersizer 2000, manufactured by Malvern Instruments Ltd.), D50 values ($\mu$m) of respective graphite powders were measured, and these values were regarded as average particle diameters.

(3) Measurement of BET Specific Surface Area

In a nitrogen gas flow at 150°C, for 15 minutes, 1 g of a powder was dried, and then the BET specific surface area of the powder was measured, using FlowSorb II2300 manufactured by Micromeritics Instrument Corporation.

(4) Powder X-ray Diffraction Measurement of Positive Electrode Active Material Powder

Powder X-ray diffraction measurement of a positive electrode active material powder was performed using a powder X-ray diffraction measurement apparatus (RINT 2500 TTR-type, manufactured by Rigaku Corporation). The powder was filled in a dedicated substrate, and the measurement was performed in the range of diffraction angle $2\theta$ = 10° to 90° using a CuK$\alpha$ radiation source, to obtain a powder X-ray diffraction pattern.

Example 1

(Positive Electrode)

As a positive electrode active material powder in a powdery material, a powder ($\alpha$-NaFeO$_2$-type crystalline structure, average particle diameter of 0.2 $\mu$m) of a lithium mixed metal oxide represented by Li$_{1.3}$(Ni$_{0.41}$Mn$_{0.49}$Fe$_{o0.10}$)O$_2$ was used.
As the two or more types of graphite powder in the powdery material, a powder (first graphite powder) having an average particle diameter of 3 $\mu$m and a powder (second graphite powder) having an average particle diameter of 8 $\mu$m were used.
As a non-graphitized carbonaceous material, a powder (acetylene black, manufactured by Denki Kagaku Kogyo Kabushiki Kaisya, trade name: Denka Black HS100) having an average particle diameter of 0.05 $\mu$m was used.
As a binder, PVdF was used.
As a solvent, NMP was used.
As a current collector (positive electrode current collector), an Al foil having a thickness of 20 $\mu$m was used.
The positive electrode active material powder, the first graphite powder, the second graphite powder, and the non-graphitized carbonaceous material were weighed so that the weight ratio of positive electrode active material powder: first graphite powder:second graphite powder:non-graphitized carbonaceous material was 88:2:2:6 and were mixed to obtain a powdery material. A binder solution of PVdF/NMP was prepared by mixing 3 parts by weight of PVdF with 55 parts by weight of NMP. The binder solution was added to the powdery material, and the resultant was mixed and kneaded by Dispermat (manufactured by VMA-GETZMANN GMBH, trade name: DISPERMAT CN10F2). In addition, an appropriate amount of NMP was added so that a viscosity is 2000-3000 cP (shear rate of 13 s$^{-1}$), to obtain a positive electrode mixture. The binder solution was added so that PVdF had a weight ratio of 2 parts by weight relative to 98 parts by weight in total of the positive electrode active material powder, the first graphite powder, the second graphite powder, and the non-graphitized carbonaceous material.
Using a reverse coater (manufactured by Hirano Tecseed Co., Ltd., trade name: TM-MC), the obtained positive electrode mixture was applied to one surface of the Al foil having a thickness of 20 $\mu$m as the positive electrode current collector to obtain an applied current collector. In the applied current collector, a solvent was removed from the applied current collector by performing vacuum drying at 60°C for 12 hours, and the applied layer was subjected to compaction using a roll pressing machine to obtain a positive electrode. The film thickness of the positive electrode including the thickness of the Al foil was 65 $\mu$m, so that the amount of the applied positive electrode active material was determined to be 17 mg/cm$^2$. When the sheet resistance of the positive electrode measured by a four probe method, it was determined to be 3.6 x 10$^{-3}$ $\Omega$, which a resistance value low enough to be in a positive electrode. An Al foil as an electrode lead was welded to this positive electrode by an ultrasonic welder.

(Negative Electrode)

As negative electrode active materials, natural graphite and artificial graphite were used. As a binder, CMC was used. They were weighed so that the weight ratio of natural graphite:artificial graphite:binder was 58.8:33.2:2. These negative electrode mixture components were added to water as a solvent, and the resultant was mixed and kneaded to obtain a negative electrode mixture. For the mixing and the kneading, Dispermat (manufactured by VMA-GETZMANN GMBH, trade name: DISPERMAT CN10F2) was used. During the mixing and the kneading, an appropriate amount of water was added so that a viscosity is 1600-2600 cP (shear rate of 13 s$^{-1}$). Using this negative electrode mixture, the negative electrode mixture was applied to one surface of a copper foil (negative electrode current collector) having a thickness of 12 $\mu$m using the reverse coater (manufactured by Hirano Tecseed Co., Ltd., trade name: TM-MC) in the same manner as in the case of the positive electrode, to obtain an applied current collector. In the applied current collector, a solvent was removed from the applied current collector by performing vacuum drying at 60°C for 12 hours, and the applied layer was subjected to compaction using a roll pressing machine to obtain a negative electrode. The film thickness of the negative electrode including the thickness of the copper foil was 65 $\mu$m, so that the amount of the applied negative electrode active material was determined to be 7.8 mg/cm$^2$. Ni foil serving as an electrode lead was welded to this negative electrode with an ultrasonic welder.

(Nonaqueous Electrolyte Secondary Battery)

As a separator, a laminated film obtained in Production Example 1 as described below was used. A positive electrode, a negative electrode, and a separator were laminated in the order of the positive electrode, the separator, and the negative electrode to obtain an electrode group. The electrode group was inverted into a battery case (Al laminate pack) composed of a film having a thickness of 10 $\mu$m.

EC, DMC, and EMC were mixed at a ratio of EC:DMC:EMC = 16:10:74 (volume ratio) to obtain a mixed solvent. LiPF$_6$ as an electrolyte was added to the mixed solvent to be 1.3 mol/liter and was dissolved to adjust an electrolytic solution. A nonaqueous electrolyte secondary battery according to Example 1 was prepared by injecting the electrolytic solution into the battery case inserted with the electrode group and performing vacuum lamination sealing.

Comparative Example 1

As a graphite powder in a powdery material, only a powder (first graphite powder) having an average particle diameter of 3 $\mu$m was used without using a powder (second graphite powder) having an average particle diameter of 8 $\mu$m. A positive electrode was obtained in the same manner as in Example 1 except that a positive electrode active material powder, the first graphite powder, and acetylene black were weighed so that the weight ratio of positive electrode active material powder:first graphite powder:acetylene black was 88:4:6 and were mixed. The film thickness of the positive electrode including the thickness of an Al foil was 131 $\mu$m, so that the amount of the applied positive electrode active material was determined to be 19 mg/cm$^2$. When the sheet resistance of the positive electrode was measured by a four probe method, it was determined to be 1.5 x 10$^{-2}$ $\Omega$, which was a considerably higher value than the sheet resistance of the positive electrode in Examples 1. Using this positive electrode, a nonaqueous electrolyte secondary battery according to Comparative Example 1 was prepared in the same manner as in Example 1.

Example 2

As the two or more types of graphite powder in a powdery material, a graphite powder having an average particle diameter of 2 $\mu$m, a graphite powder having an average particle diameter of 3 $\mu$m, and a graphite powder having an average particle diameter of 8 $\mu$m were used. A positive electrode was obtained in the same manner as in Example 1 except that a positive electrode active material powder, the graphite powder having an average particle diameter of 2 $\mu$m, the graphite powder having an average particle diameter of 3 $\mu$m, the graphite powder having an average particle diameter of 8 $\mu$m, and a non-graphitized carbonaceous material were weighed so that the weight ratio of positive electrode active material powder:graphite powder having an average particle diameter of 2 $\mu$m:graphite powder having an average particle diameter of 3 $\mu$m:graphite powder having an average particle diameter of 8 $\mu$m:non-graphitized carbonaceous

material was 85:0.5:0.5:4:5 and were mixed to obtain a powdery material. The film thickness of the positive electrode including the thickness of an Al foil was 75 $\mu$m, so that the amount of the applied positive electrode active material was determined to be 24 mg/cm$^2$. When the sheet resistance of the positive electrode was measured by a four probe method, it was determined to be 3 x 10$^{-4}$ $\Omega$, which was a resistance value low enough to be in a positive electrode. Using this positive electrode, a nonaqueous electrolyte secondary battery was prepared in the same manner as in Example 1.

(Evaluation of Nonaqueous Electrolyte Secondary Battery)

Using each nonaqueous electrolyte secondary battery obtained in Examples 1, Example 2, and Comparative Example 1 as described above, a discharge rate test was carried out under conditions shown below at 25°C. In the discharge rate test, a discharge capacity was measured while changing a discharging current during discharging, and a discharge capacity maintenance rate was calculated according to an equation as described below.

<Discharge Rate Test>

**[0096]**

　　Charge: Charge maximum voltage: 4.2 V, charge time: 4 hours (1C)
　　Discharge: A discharge minimum voltage was made to be constant at 2.5 V, and a discharge current in each cycle was changed as described below. A higher discharge capacity by discharging at 10C and 20C (high current rates) means a higher output under high current rate conditions.
　　Discharge at 1st and 2nd cycles: 0.2C
　　Discharge at 3rd cycle: 1C
　　Discharge at 4th cycle: 5C
　　Discharge at 5th cycle: 10C
　　Discharge at 6th cycle: 20C

<Discharge Capacity Maintenance Rate>

$$\text{Discharge capacity maintenance rate (\%) = discharge capacity at cycle (discharge rate) of given turn / discharge capacity at 2nd cycle (0.2C rate) x 100}$$

Characteristics of Battery in Example 1

As a result of determining discharge capacity maintenance rates by the above-mentioned evaluation method using the nonaqueous electrolyte secondary battery according to Example 1, the discharge capacity maintenance rate at 1C was 83%, the discharge capacity maintenance rate at 5C was 48%, the discharge capacity maintenance rate at 10C was 23%, and the discharge capacity maintenance rate at 20C was 5%. These values were extremely high values as compared to the values of the nonaqueous electrolyte secondary battery according to Comparative Example 1.

Characteristics of Battery in Comparative Example 1

As a result of determining the discharge capacity maintenance rates by the above-mentioned evaluation method using the nonaqueous electrolyte secondary battery according to Comparative Example 1, the discharge capacity maintenance rate at 1C was 69%, the discharge capacity maintenance rate at 5C was 24%, the discharge capacity maintenance rate at 10C was 7%, and the discharge capacity maintenance rate at 20C was 0%, and these values were low values.

Characteristics of Battery in Example 2

As a result of determining discharge capacity maintenance rates by the above-mentioned evaluation method using the nonaqueous electrolyte secondary battery according to Example 2, the discharge capacity maintenance rate at 1C was 86%, the discharge capacity maintenance rate at 5C was 66%, the discharge capacity maintenance rate at 10C was 18%, and the discharge capacity maintenance rate at 20C was 1%. These values were extremely high values as compared to the values of the nonaqueous electrolyte secondary battery according to Comparative Example 1.

Production Example 1 (Production of Laminated Film)

(1) Production of Coasting Liquid

In 4200 g of NMP, 272.7 g of calcium chloride was dissolved, and thereafter 132.9 g of para-phenylenediamine was added to the resultant and was dissolved completely. To the resultant solution was added gradually 243.3 g of terephthalic dichloride, and this was polymerized to obtain para-aramid, which was diluted further with NMP to obtain a para-aramid solution (A) with a concentration of 2.0% by weight. To 100 g of the resultant para-aramid solution were added 2 g of an alumina powder (a) (manufactured by Nippon Aerosil Co., Ltd., Alumina C, average particle diameter of 0.02 $\mu$m) and 2 g of an alumina powder (b) (Sumicorundum manufactured by Sumitomo Chemical Company, Limited, AA03, average particle diameter of 0.3 $\mu$m) as fillers in a total amount of 4 g, and these were mixed, treated three times by a nanomizer, further filtered through a 1000-mesh metal gauze, and defamed under reduced pressure to produce a coating slurry (B). The weight of the alumina powders (fillers) based on the total weight of the para-aramid and the alumina powders was 67% by weight.

(2) Production of Laminated Film and Evacuation Thereof

As the porous film, a polyethylene porous film (film thickness of 12 $\mu$m, air permeability of 140 spec/100 cc, average pore size of 0.1 $\mu$m, porosity of 50%) was used.
The above-mentioned polyethylene porous film was fixed on a PET film having a thickness of 100 $\mu$m, and the coating slurry (B) was coated on the porous film by a bar coater manufactured by Tester Sangyo Co., Ltd. The PET film and the coated porous film were immersed in water while maintaining integration of them to deposit a para-aramid porous membrane (heat resistant porous layer), followed by drying the solvent to obtain a laminated film 1 in which the heat resistant porous layer and the porous film were laminated. The thickness of the laminated film 1 was 16 $\mu$m, and the thickness of the para-aramid porous membrane (heat resistant porous layer) was 4 $\mu$m. The laminated film 1 had an air permeability of 180 sec/100 cc and a porosity of 50%. The cross section of the heat resistant porous layer in the laminated film 1 was observed by a scanning electron microscope (SEM) to find that comparatively small micropores of around from 0.03 $\mu$m to 0.06 $\mu$m and comparatively large micropores of around from 0.1 $\mu$m to 1 $\mu$m were present. Revaluation of the laminated film was performed by a method as described below.

<Evaluation of Laminated Film>

(A) Measurement of Thickness

The Thickness of the laminated film and the thickness of the porous film were measured according to JIS standard (K7130-1992). As the thickness of the heat resistant porous layer, a value obtained by subtracting the thickness of the porous film from the thickness of the laminated film was used.

(B) Measurement of Air Permeability by Gurley method

The air permeability of the laminated film was measured with a digital timer type Gurley-type Densometer manufactured by Yasuda Seiki Seisakusho, Ltd., according to JIS P8117.

(C) Porosity

A sample of the resultant laminated film was cut into a square with a side length of 10 cm, and the weight W (g) and thickness D (cm) thereof were measured. The weight $W_i$ (g) of each layer in the sample was determined, and the volume of each layer was determined from $W_i$ and the true relative density (true relative density i (g/cm$^3$)) of the materials of each layer. The porosity (% by volume) was determined by the following equation:

$$\text{Porosity (\% by volume)} = 100 \times [1 - (W_1/\text{true relative}$$
$$\text{density 1} + W_2/\text{true relative density 2} + ... + W_n/\text{true}$$
$$\text{relative density n}) / (10 \times 10 \times D)]$$

INDUSTRIAL APPLICABILITY

In accordance with the present invention, it is possible to obtain a nonaqueous electrolyte secondary battery capable of exhibiting higher output under high current rate conditions compared with conventional nonaqueous electrolyte secondary batteries, the secondary battery can preferably be used, particularly, in applications requiring a high output under high current rate conditions, namely, applications requiring a large current, such as applications for driving the motors of automobiles, electric power tools, and the like, and applications requiring rapid discharge and charge, and the present invention is industrially extremely useful.

**Claims**

1. A powdery material comprising a positive electrode active material powder which has an average particle diameter of from 0.05 $\mu$m to 1 $\mu$m and two or more types of graphite powder, wherein the average particle diameters of the two or more types of the graphite powder are different from each other and each of the graphite powder has an average particle diameter of from 0.01 $\mu$m to 20 $\mu$m.

2. The powdery material according to claim 1, wherein the two or more types of the graphite powder consist of a first graphite powder which has an average particle diameter of not less than 0.1 $\mu$m and less than 5 $\mu$m and a second graphite powder which has an average particle diameter of not less than 5 $\mu$m and not more than 20 $\mu$m.

3. The powdery material according to claim 1 or 2, wherein all graphite particles composing the two or more types of the graphite powder are scaly in shape.

4. The powdery material according to any one of claims 1 to 3, wherein a weight ratio of the graphite powders to 100 parts by weight of the positive electrode, active material powder is from 1 part by weight to 30 parts by weight.

5. The powdery material according to any one of claims 1 to 4, wherein the positive electrode active material powder is a powder made of a lithium mixed metal oxide comprising Ni and Mn.

6. The powdery material according to claim 5, wherein the lithium mixed metal oxide is represented by the following formula (A):

$$Li_\alpha(Ni_{1-(x+y+z)}Mn_xFe_yCo_z)O_2 \qquad (A)$$

wherein 0<x<1, 0≤y<1, 0≤z<1, 0<(x+y+z)<1, and 0.5≤$\alpha$≤1.5.

7. A positive electrode mixture comprising the powdery material according to any one of claims 1 to 6, a binder, and a solvent.

8. The positive electrode mixture according to claim 7, further comprising a non-graphitized carbonaceous material.

9. A positive electrode obtained by applying the Positive electrode mixture according to claim 7 or 8 to a current collector to yield an applied current collector and removing the solvent from the applied current collector.

10. A Nonaqueous electrolyte secondary battery, comprising a Positive electrode according to claim 9, a negative electrode, and an electrolyte.

11. The Nonaqueous electrolyte secondary battery according to claim 10, further comprising a separator.

12. The nonaqueous electrolyte secondary battery according to claim 11, wherein the separator is composed of a

EP 2 463 939 A1

laminated film comprising a porous film and a heat resistant porous layer disposed thereon.

## INTERNATIONAL SEARCH REPORT

| | International application No. |
|---|---|
| | PCT/JP2010/063441 |

A. CLASSIFICATION OF SUBJECT MATTER
*H01M4/13*(2010.01)i, *H01M2/16*(2006.01)i, *H01M4/131*(2010.01)i, *H01M4/139*
(2010.01)i, *H01M4/1391*(2010.01)i, *H01M4/505*(2010.01)i, *H01M4/525*
(2010.01)i, *H01M4/62*(2006.01)i
According to International Patent Classification (IPC) or to both national classification and IPC

B. FIELDS SEARCHED

Minimum documentation searched (classification system followed by classification symbols)
H01M4/13, H01M2/16, H01M4/131, H01M4/139, H01M4/1391, H01M4/505,
H01M4/525, H01M4/62

Documentation searched other than minimum documentation to the extent that such documents are included in the fields searched
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2007-80652 A (Sumitomo Osaka Cement Co., Ltd.), 29 March 2007 (29.03.2007), entire text (Family: none) | 1-11 |
| A | JP 2007-173134 A (Sumitomo Osaka Cement Co., Ltd.), 05 July 2007 (05.07.2007), entire text (Family: none) | 1-11 |
| A | JP 2005-116304 A (Nissan Motor Co., Ltd.), 28 April 2005 (28.04.2005), entire text (Family: none) | 1-11 |

☒ Further documents are listed in the continuation of Box C.　　☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 15 November, 2010 (15.11.10) | 22 November, 2010 (22.11.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2010/063441

C (Continuation). DOCUMENTS CONSIDERED TO BE RELEVANT

| Category* | Citation of document, with indication, where appropriate, of the relevant passages | Relevant to claim No. |
|---|---|---|
| A | JP 2008-243529 A (Hitachi Vehicle Energy, Ltd.), 09 October 2008 (09.10.2008), entire text (Family: none) | 1-11 |
| A | JP 9-161838 A (Toray Industries, Inc.), 20 June 1997 (20.06.1997), entire text (Family: none) | 1-11 |
| A | JP 2009-158484 A (Sumitomo Chemical Co., Ltd.), 16 July 2009 (16.07.2009), claim 2 & WO 2009/072664 A1 | 12 |

Form PCT/ISA/210 (continuation of second sheet) (July 2009)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11040140 A
- JP 2008084826 A
- JP 2000030686 A
- JP 10324758 A